# EUROPEAN PATENT SPECIFICATION

(11) **EP 2 425 924 B1**
(45) Date of publication and mention of the grant of the patent: **24.04.2013**
(21) Application number: 11175738.1
(22) Date of filing: 28.07.2011
(51) Int. Cl.: B23Q 35/04, B23C 3/35, B23Q 35/12

(54) **A device for key reproducing machines wherein the pattern is cut in the lateral planar sides of the key blade**
Vorrichtung für Schlüsseldupliziermaschinen, wobei die Struktur in die seitlichen ebenen Seiten des Schlüsselblatts geschnitten wird
Dispositif pour machines de reproduction de clés dans lesquelles le motif est découpé sur les côtés de planaires latéraux du panneton de clé

(30) Priority: 07.09.2010 ES 201031333
(43) Date of publication of application: 07.03.2012
(73) Proprietor: Alejandro Altuna, S.A., 20500 Mondragon Guipuzcoa (ES)
(72) Inventor: Garcia Madinagoitia, Iban, 20500 Mondragon (Guipuzcoa) (ES)
(74) Representative: Becker Kurig Straus

(56) References cited:
- US-A- 2 879 695
- US-A- 4 221 514
- US-A- 5 908 273

## Description

### FIELD OF THE INVENTION

The present invention relates to a device applicable in manual operation machines which are intended for the reproduction, copy or duplication of keys which are designated as "planar" in this context for the reason that its pattern is engraved in the lateral and greater sides of its blade, in contrast with the keys called "indented" which carry it in the edge of the key blade; the key on which the copy is made is designated as a blank or virgin.

### PRIOR ART

A common feature of this type of manual reproduction machines of planar keys is a lever with which according to a vertical coordinate axis "Z", referring to the cutting depth, lowers a carriage which contains a palpation head assembly which will record the cut of the original key to be reproduced, and a milling head fitted with a milling cutter which, by copying the movement of the palpation tip of the palpation head assembly, will remove the material of the key blade of a blank key by reproducing identically the cut forming the pattern of the original key; the palpation tip and the milling cutter have to be at the same height with respect, respectively, to the original key and the blank key, it is still necessary to perform a calibration for each type of key and of milling cutter to be utilised in each case; so that the palpation tip may be situated vertically on each mark engraved in the pattern of the original key at least, the other lever with which the carriage can move the coordinate axes "X" and "Y".

The known machines according to an embodiment are characterised in that, for performing the copy, a force must be exerted upon the marks cut in the original key, which is at the source of the problems which this invention intends to solve.

This problem consists in that, during the copying process, the force exerted upon the original key at each operation may be, and is indeed, of different intensity; even the same operator may be applying a different force on some marks or others of the same original key. Due to the elasticity of the material and to the allowances and tolerances in the assembly of the parts of the machine, performing an excessive force upon a mark of the original key perfectly will cause the copy thereof in the blank key to be of greater depth than the reference; on the contrary, if the force exerted is smaller than necessary, the depth of the copied mark will also be smaller than the original. Taking into account that these cuts of planar keys are extremely accurate, these differences in depth of cut result in the production of faulty keys which must be discarded, not to mention the consecutive loss in terms of material, labour and negative image of the product on the market.

This problem is not only encountered when talking about reproducing original keys. It also comes up when trying to perform an adjustment so as to locate the palpation tip and the milling cutter at the same height with precision, since, as already mentioned, both are different according to the model of the key or the manufacturer of the lock, to the extent that they must be changed constantly when performing a copy and, consequently, the height has to be adjusted at every change so that the copy perfectly matches the original; in fact, this adjustment is done above the original key and, to this end, one should act on the lever of the carriage carrying both (palpation and milling cutter) head assemblies by exerting force with the palpation tip on the original key, so as to end up in the same position as the duplicate: an excessive force causes a poor adjustment due to the elastic deformation of the machine and if the same force is not used when reproducing, said elasticity of the machine results in the production of a faulty copy. At the end of the day, the objective in this respect is to achieve that the force exerted on the lever remains the same throughout the adjustment and copying processes.

Such a machine further including a force sensor is known from the patent document US 5,908,273.

### DESCRIPTION OF THE INVENTION AND ADVANTAGES

Under these circumstances, the present invention provides a device for key reproducing machines wherein the pattern is cut in the lateral planar sides of the key blade, characterised in that the reproducing machine possesses a force sensor which is capable of measuring the force exerted upon the key blade of the original key and which is installed in the proper palpation head assembly of the reproducing machine: according to the invention, this force sensor reacts to a mechanical deformation with the emission of a low voltage electric signal which is sent to a signal amplifier whose output is connected to an input of a microprocessor which sends it to a visual indicator once converted into a meaningful picture, as well as to a sound transmitter, whereas visual indicator and sound transmitter are integrated into a control panel.

Which means that in this embodiment the force sensor is exactly at the vertical of the palpation tip and at the upper end of the palpation head assembly, thereby forming a vertical kinematic chain of axial alignment which allows the sensor to measure directly the load applied through the lever and, accordingly, to react to such load with precision; the measurement is not performed in the milling head because the milling cutter is going to alter its position during the cutting process and its response is not reliable, while the palpation head assembly is impacted by the load which causes the elastic deformation of the carriage of the machine.

The combination of the force sensor with the microprocessor allows the operator, through the nature of the work, to keep an eye on the action of the palpation head assembly on the original key, can be warned by ostentatious visual and acoustic signals that he is going to apply a force close to the value which should not be exceeded.

At the end of the day, the device provided enables to minimise any error due to the operator, with the possibility of obtaining satisfactory results with experienced operators as well as new to the job.

On the other hand, it is advantageous to note that this type of force sensor is a low cost commercial component and that, intrinsically, is quite simple of use for these machines.

These and other characteristics of the invention are detailed in the following description which is illustrated in the accompanying drawings.

### DRAWINGS AND REFERENCES

For better understanding of the nature of the invention, the accompanying drawings represent an industrial form of embodiment purely illustrated by way of example and without limitation.
Figure 1 shows a perspective of a machine according to the invention.
Figure 2 shows sample a front elevation of the carriage (19) in an orthogonal projection.
Figure 3 is an enlargement of section III-III indicated on Figure 2.
Figure 4 is an electric diagram including the force sensor (1), the microprocessor (14), the visual indicator (15) and the sound transmitter (16).
Figure 5 is a schematic front view of the control panel (17).

The following references are indicated in these figures:
1.- Force sensor
2.- Feeler
3.- Palpation axis
4.- Tool-holder
5.- Palpation tip
6.- Force sensor (1) support
7.- Inverted cup or rod
8.- Resilient compression element
9.- Palpation head assembly
10.- Milling head
10a.- Milling cutter in milling head (10)
11.- Original key
12.- Blank or virgin key to be copied
13.- Signal amplifier
14.- Microprocessor
15.- Visual indicator
16.- Sound transmitter
17.- Control panel
18.- Power supply of force sensor (1)
19.- Carriage carrying the head assemblies (9) and (10)
20.- Lever for coordinate axis "Z"
21.- Lever for coordinate axes "X" and "Y"
22.- First light indicator
23.- Second light indicator

### DESCRIPTION OF A PREFERRED EMBODIMENT

With respect to the drawings and references mentioned above, the attachments illustrate a preferred form of execution of the object of the invention, consisting of a device applicable to flat key reproducing machines which are actuated manually (with the logic exception of the electric actuation of the milling cutter of the milling head [10]) and which have a generally known assembly comprising a lever (20) with which, according to a vertical coordinate axis "Z", referring to the cutting depth, lowers a carriage (19) containing a palpation head assembly (9) which will record the cut of the original key (11) to be reproduced, and a milling head fitted (10) with a milling cutter (10a) which, by copying the movement of the palpation tip (5) of the palpation head assembly (9), will remove the material of the key blade of a blank key (12) by reproducing identically the cut forming the pattern of the original key (11); the palpation tip (5) and the milling cutter (10a) have to be at the same height with respect, respectively, to the original key (11) and the blank key (12), it is still necessary to perform a calibration for each type of key and of milling cutter to be utilised in each case; so that the palpation tip (5) may be situated vertically on each mark engraved in the pattern of the original key (11), at least, the other lever (21) with which the carriage can move along the coordinate axes "X" and "Y".

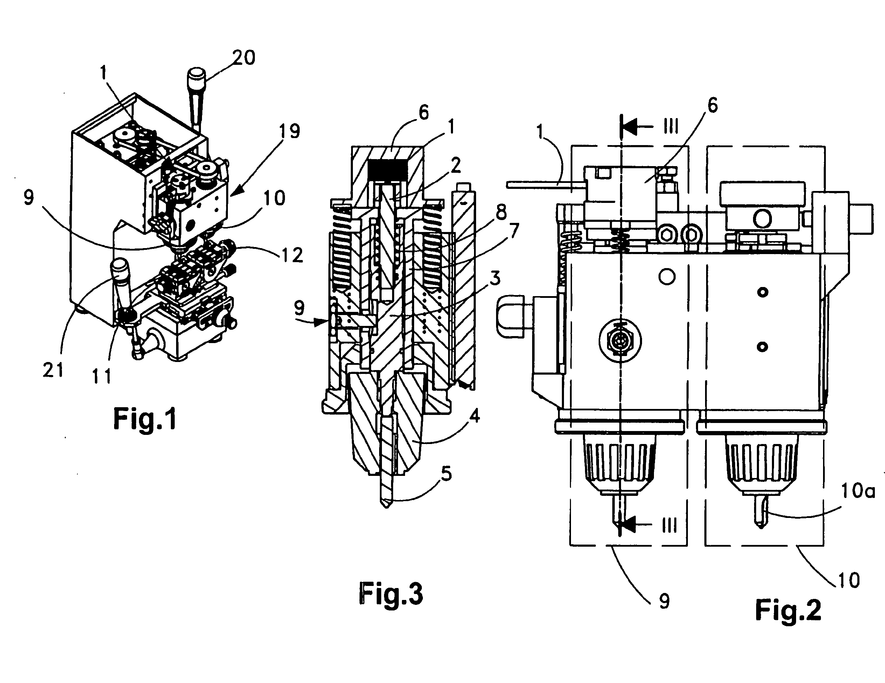

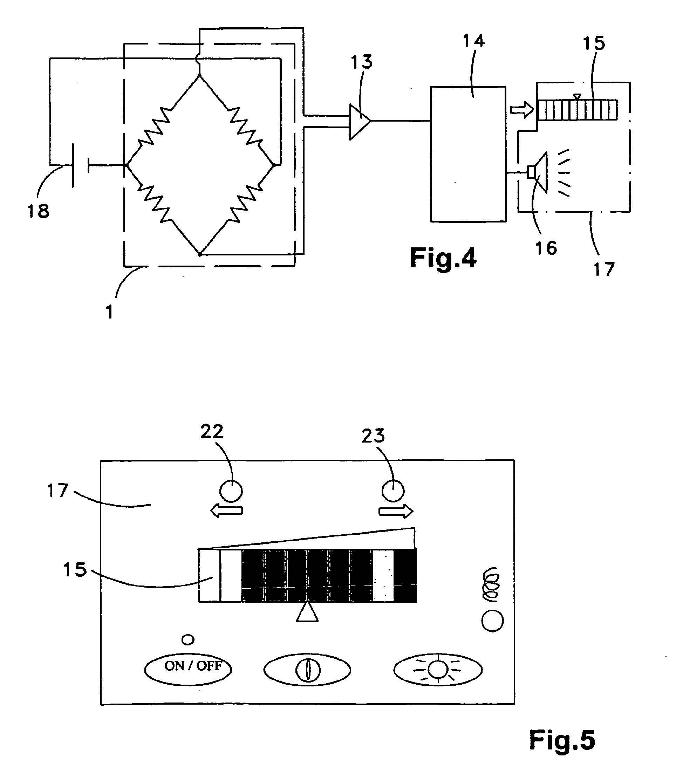

In accordance with an object of the invention (Figure 3), the reproducing machine possesses a force sensor (1) which is capable of measuring the force exerted upon the key blade of the original key (11) and which is installed in the proper palpation tip (9) of the reproducing machine. This arrangement allows the force sensor (1) to receive directly the load due to the reaction of the force exerted by the palpation tip (5) on the key blade (in the setting), and the mark of pattern engraved identically (in the copy), of the original key (11); in such a way that, according to the invention, the force sensor (1) reacts to a mechanical deformation with the emission of a low voltage electric signal which is sent (Figure 4) to a signal amplifier (13) whose output is connected to an input of a microprocessor (14) which sends it to a visual indicator (15) once converted into a meaningful picture, as well as to a sound transmitter (16), whereas usual indicator (15) and sound transmitter (16) are integrated into a control panel (17). It is provided preferably (Figure 5) that the visual indicator (15) consists of a bar which, by means of colour bands going from white to red through green, will illuminate by indicating the amount of force which is going to be exerted by the operator on the lever along the coordinate axis "Z" (20) and that, as already said, reflects directly the force applied upon the key blade, or the marks engraved identically, of the original key (11), a process in which the optimal point of application of the force which should not be exceeded is also indicated; the purpose of the sound transmitter (16) is to inform audibly of the moment at which said optimal point has been reached, since, during the copying process, the visual attention of the operator is focused on the key blade to be copied and not so much on the visual indicator (15); Figure 5 shows schematically a possible form of execution of a control panel (17) that, among other function controls and operation indicators, is fitted with a first light indicator (22) showing that the palpation tip is already touching the original key (11) and a second light indicator (23) showing that the tip of the milling cutter (10a) is already touching the blank key (12). The overall consequence is that the operator always applies the same force of optimal value, for the adjustment as well as for the copying process; which results in the production of copies wherein errors are minimised and, in other words, they are of better quality than those obtained currently using conventional machines known.

Figure 4 shows an electric diagram in which the force sensor (1) is founded on the physical construction of a "Wheatstone bridge", fitted with a power supply (18) and, through a voltage signal amplifier (13), connected to a microprocessor (14) which operates these visual indicator (15) and sound transmitter (16).

The mechanical assembly of the device is illustrated clearly in Figure 3 and is characterised in that: the force sensor (1) is applied directly onto the upper end of a feeler (2) which is fixed variably in a palpation axis (3) to which a tool-holder (4) is coupled, which contains the palpation tip (5) appropriate to the type of operation to be carried out; the force sensor (1) is allocated to a support (6); the palpation axis (3) is adjusted slidingly in an inverted cup (7) whose bottom is traversed comfortably by the feeler (3); the support (6) rests on the inverted cup (7) and is associated with the body of the palpation head assembly (9) by resilient compression means; and there is a resilient compression element (8) between the palpation axis (3) and the inverted cup (7).

## Claims

1. A key reproducing machine wherein the pattern is cut in the lateral planar sides of the key blade, wherein the reproducing machine possesses a force sensor (1) which is capable of measuring the force exerted upon the key blade of the original key (11) and which is installed in the actual palpation head assembly (9) of the reproducing machine, **characterised in that** the force sensor (1) is adapted to react to a mechanical deformation with the emission of a low voltage electric signal which is adapted to be sent to a signal amplifier (13) whose output is connected to an input of a microprocessor (14) which is adapted to send it to a visual indicator (15) once converted into a meaningful picture, as well as to a sound transmitter (16), whereas visual indicator (15) and sound transmitter (16) are integrated into a control panel (17).

2. A key reproducing machine according to the preceding claim, **characterised in that** the force sensor (1) is applied directly onto the upper end of a feeler (2) which is fixed variably in a palpation axis (3) to which a tool-holder (4) is coupled, which contains the palpation tip (5) appropriate to the type of operation to be carried out.

3. A key reproducing according to the preceding claims, **characterised in that** the force sensor (1) is allocated to a support (6).

4. A key reproducing machine according to the preceding claims, **characterised in that** the palpation axis (3) is adjusted slidingly in an inverted cup (7) whose bottom is traversed comfortably by the feeler (3).

5. A key reproducing machine according to claim 4, **characterised in that** the support (6) rests on the inverted cup (7) and is associated with the body of the palpation head assembly (9) by resilient compression means.

6. A key reproducing machine according to any of claims 4 or 5, **characterised in that** there is a resilient compression element (8) between the palpation axis (3) and the inverted cup (7).

## Patentansprüche

1. Anlage zum Nachmachen eines Schlüssels, worin das Muster in die lateralen planaren Seiten des Schlüsselblatts geschnitten ist, worin die Anlage zum Nachmachen einen Kraftsensor (1) aufweist, mit dem die auf den Schlüsselschaft des ursprünglichen Schlüssels (11) ausgeübte Kraft bestimmt werden kann und der in der eigentlichen Abtastkopfbaugruppe (9) der Anlage zum Nachmachen eingebaut ist, **dadurch gekennzeichnet, dass** der Kraftsensor (1) zur Reaktion auf eine mechanische Verformung durch die Aussendung eines elektrischen Signals niederer Spannung angepasst ist, das zur Übertragung an einen Signalverstärker (13) angepasst ist, dessen Ausgang mit einem Eingang eines Mikroprozessors (14) verbunden ist, der zu dessen Übertragung an eine visuelle Anzeige (15), wenn einmal in ein aussagekräftiges Bild konvertiert, ebenso wie an einen akustischen Sender (16) angepasst ist, worin die visuelle Anzeige (15) und der akustische Sender (16) in ein Bedienfeld (17) integriert sind.

2. Anlage zum Nachmachen eines Schlüssels gemäß dem vorangehenden Anspruch, **dadurch gekennzeichnet, dass** der Kraftsensor (1) auf das obere Ende eines Fühlers (2) unmittelbar appliziert ist, der auf einer Abtastachse (3) variabel angebracht ist, die mit einer Werkzeughalterung (4) verbunden ist, in der die für die durchzuführende Einsatzart geeignete Abtastspitze (5) aufgenommen ist.

3. Anlage zum Nachmachen eines Schlüssels gemäß den vorangehenden Ansprüchen, **dadurch gekennzeichnet, dass** der Kraftsensor (1) an einem Träger (6) bereitgestellt ist.

4. Anlage zum Nachmachen eines Schlüssels gemäß den vorangehenden Ansprüchen, **dadurch gekennzeichnet, dass** die Abtastachse (3) in einer invertierten Aufnahme (7) gleitend eingestellt wird, deren Unterseite durch den Fühler (3) einfach durchlaufen wird.

5. Anlage zum Nachmachen eines Schlüssels gemäß Anspruch 4, **dadurch gekennzeichnet, dass** der Träger (6) auf der invertierten Aufnahme (7) ruht und durch elastische Kompressionsmittel mit dem Körper der Abtastkopfbaugruppe (9) in Verbindung steht.

6. Anlage zum Nachmachen eines Schlüssels gemäß einem der Ansprüche 4 oder 5, **dadurch gekennzeichnet, dass** ein elastisches Kompressionselement (8) zwischen der Abtastachse (3) und der invertierten Aufnahme (7) vorliegt.

## Revendications

1. Machine de reproduction de clé dans laquelle le motif est découpé dans les côtés plans latéraux de la lame de clé, la machine de reproduction possédant un capteur de force (1) qui est capable de mesurer la force exercée sur la lame de clé de la clé originale (11) et qui est installée dans l'ensemble de tête de palpation réelle (9) de la machine de reproduction, **caractérisée en ce que** le capteur de force (1) est adapté pour réagir à une déformation mécanique avec l'émission d'un signal électrique basse tension qui est adapté pour être envoyé à un amplificateur de signal (13) dont la sortie est connectée à une entrée d'un microprocesseur (14) qui est adapté pour envoyer celui-ci à un indicateur visuel (15) une fois converti en image significative, ainsi qu'un émetteur sonore (16), tandis que l'indicateur visuel (15) et l'émetteur sonore (16) sont intégrés dans un panneau de commande (17).

2. Machine de reproduction de clé selon la revendication précédente, **caractérisée en ce que** le capteur de force (1) est appliqué directement sur l'extrémité supérieure d'un tâteur (2) qui est fixé de façon variable dans un axe de palpation (3) auquel un porte-outil (4) est couplé, qui contient la pointe de palpation (5) appropriée pour le type d'opération à conduire.

3. Machine de reproduction de clé selon les revendications précédentes, **caractérisée en ce que** le capteur de force (1) est alloué à un support (6).

4. Machine de reproduction de clé selon les revendications précédentes, **caractérisée en ce que** l'axe de palpation (3) est ajusté de façon coulissante dans une coupelle inversée (7) dont le fond est traversé confortablement par le tâteur (3).

5. Machine de reproduction de clé selon la revendication 4, **caractérisée en ce que** le support (6) repose sur la coupelle inversée (7) et est associé au corps de l'ensemble de tête de palpation (9) par des moyens de compression résilients.

6. Machine de reproduction de clé selon l'une quelconque des revendications 4 ou 5, **caractérisée en ce qu'**il existe un élément de compression résilient (8) entre l'axe de palpation (3) et la coupelle inversée (7).
